# EUROPEAN PATENT APPLICATION

(11) **EP 0 625 695 A1**
(43) Date of publication of application: **23.11.1994**
(21) Application number: 94303229.2
(22) Date of filing: 04.05.1994
(51) Int. Cl.: G01F 23/02

(54) **Improvements in sight glasses**

(30) Priority: 15.05.1993 GB 9310038
(71) Applicant: Norgren Martonair Limited, Lichfield Staffordshire, WS13 6SB (GB)
(72) Inventor: Dickson, Kevin Thomas, Denver, Colorado 80209 (US); Wates, Michael John, Stretton-On-Fosse, Gloucestershire (GB)
(74) Representative: Lane, Michael John

(57) **Abstract**

A sight glass for determining the level of liquid (23) in a metal bowl (1) of a compressed air filter or lubricator comprises a rectangular chamber (19) having a rear, brightly coloured wall (5) and a front, transparent window (12) formed internally with small triangular pyramids (14), the apex of each of which faces the rear wall (5). The pyramids (14) retro-reflect light when interfaced with air but transmit it to the brightly coloured wall (5) from which it is reflected back through the window (12) when interfaced with liquid (23). An image comprising a brightly coloured band and a colourless band therefore appears in the window (12), the readily visible interface between the bands corresponding to the level (24) of the liquid (23) in the bowl(1).

## Description

This invention relates to sight glasses, that is to say devices that give a visual indication of the liquid level in a vessel. The invention has especial, but not exclusive, application to sight glasses for use in compressed air filters or lubricators in which it is desirable or necessary to have a visual indication of the prevailing liquid level in the bowl thereof.

As is known, a compressed air filter or regulator includes a depending bowl which, in the case of a filter, collects water and foreign bodies filtered out of the compressed air and, in the case of a lubricator, contains lubricating oil. The bowl may be transparent, in which case the liquid level therein is self-evident, or alternatively may be opaque, for example made of metal, in which case it is necessary or at least desirable to provide a sight glass whereby the liquid level may readily be ascertained.

Various designs of sight glass have been proposed and used in relation to compressed air filters and regulators having metal bowls. Almost invariably, the sight glass has been in the form of an external, vertical glass tube communicating with the interior of the bowl whereby the liquid level in the tube corresponds with that in the bowl and is visible. In the case of colourless liquids, in particular, it is however sometimes difficult to discern the level. Visibility of the level of colourless liquids may be enhanced by, for example, placing a pattern on the rear surface of the tube, the pattern being such that its appearance below the liquid level in the tube (ie as viewed through the liquid) is markedly different from the appearance above it (ie as viewed through air).

The provision of tubular sight glasses is, however, relatively expensive and it is an object of the present invention to provide an alternative form of sight glass that is less costly to provide and by means of which the level of a liquid, even if colourless, may be instantly discerned.

According to the present invention, therefore, there is provided a sight glass comprising a chamber into which liquid whose level is to be determined can be admitted, the chamber being defined in part by front and rear walls arranged in spaced relationship with one another, the front wall being translucent and the internal surface thereof comprising a plurality of generally pyramidal formations each arranged with an apex thereof facing the rear wall so that, when interfaced with air, they retro-reflect a major proportion of light incident thereon back through the front wall but that, when interfaced with a liquid, they transmit a major proportion of such light to the rear wall whence it is reflected back through the liquid and the front wall, the internal surface of the rear wall being coloured or otherwise ornamented, whereby visibly contrasted images between that part of the front wall interfaced with air and that part thereof interfaced with liquid will be visible through the front wall.

In a sight glass of the invention, therefore, most of the light incident on the translucent front wall at and below the liquid level in the chamber will be transmitted to the rear wall and reflected back through the liquid and the front wall whereby a coloured or otherwise ornamented image will be visible at and below that level. Above the level, however, most of the light incident on the front wall will be reflected back by the generally pyramidal formations and little, if any, such image will be visible. The transition between the two images, which of course occurs at the liquid surface in the chamber, will therefore be readily apparent. Preferably, the internal surface of the rear wall is simply brightly coloured, for example in green or orange whereby (in the case of a clear liquid, as usually will be the case, such as water or a light lubricating oil) the contrast will be between a lower, bright green or orange image and an upper substantially colourless one. Alternatively, the internal surface of the rear wall may have on it some sort of distinctive pattern which will be readily visible below the liquid level but substantially invisible above it.

The translucent front wall preferably comprises a flat portion on the rear of which the pyramidal formations are provided, preferably as an integral part. The rear wall is preferably flat and arranged in spaced, substantially parallel, relationship with the aforesaid flat portion of the front wall.

The translucent front wall is preferably transparent and made of glass or, advantageously, a polymer such as polycarbonate or polyamide.

The formations preferably comprise a multiplicity of substantially square or triangular pyramids arranged in a side-by-side array with their respective apices directed towards the interior of the chamber and their respective bases all lying in one and the same flat plane. In an especially preferred embodiment, the formations are based on a so-called "cube corner" that is to say a regular triangular pyramid having an equilateral triangular base and three isosceles, right-angled triangular faces which lie in respective planes inclined at a right angle to one another and which are inclined at an angle whose tan is 1.33 to the equilateral triangular base.

A sight glass of the invention may be a discrete device for attachment to a vessel or the like the liquid level in which is to be determined. Equally, however, it may form an integral part of the vessel. For example, the aforesaid rear wall may be defined by part of the vessel wall, such as a metal compressed air filter or lubricator bowl, the vessel wall having apertures formed in it to allow liquid in the vessel to enter the sight glass chamber.

A preferred embodiment of the invention will now be described in more detail, by way of example only, with reference to the accompanying drawings in which:
- FIG. 1: is a sectional side elevation of a compressed air filter (not showing, for the sake of clarity, the internal filtering components) including a sight glass of the invention;
- FIG. 2: is a side view of the front, transparent cover of the sight glass shown in Fig 1;
- FIG. 3: is a perspective view of the front, transparent cover of the sight glass shown in Figs 1 and 2;
- FIG. 4: is an enlarged section on the line IV-IV of Fig 3; and,
- FIG. 5: is a perspective view, on a reduced scale, of the clamp used to retain in place the transparent cover of the sight glass shown in Figs 1 to 4.

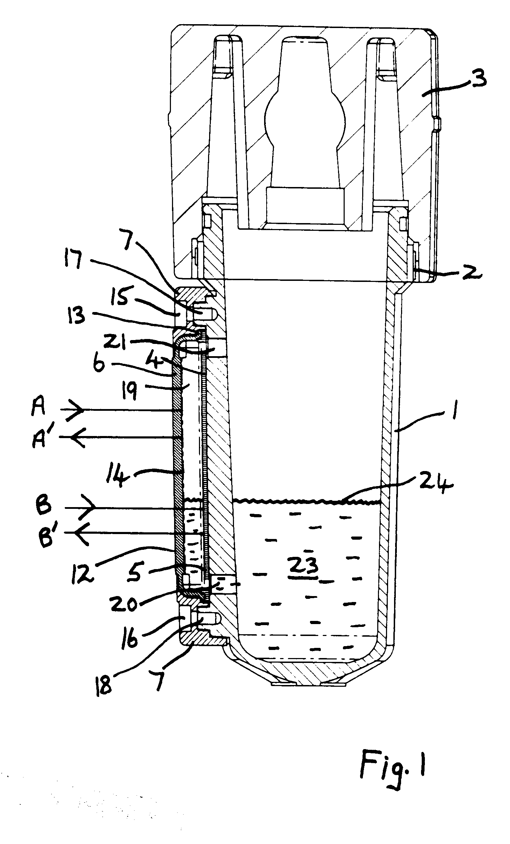

Referring firstly to Fig 1 of the drawings, a generally cylindrical bowl 1 made of metal is detachably secured at its upper end, as is conventional, by means of a bayonet connection 2 to the body 3 of the filter. Part of the outer surface of the bowl 1 is formed with a flat elongate rectangular face 4. Mounted on the face 4 is a rectangular, brightly coloured orange sealing strip 5 made of a resilient plastics material.

Superposed, in a vertical orientation, on the strip 5 of orange-coloured sealing material is a transparent cover 6 moulded in one piece in polycarbonate. The cover 6 is retained in place by a clamp 7 in the manner described in more detail below.

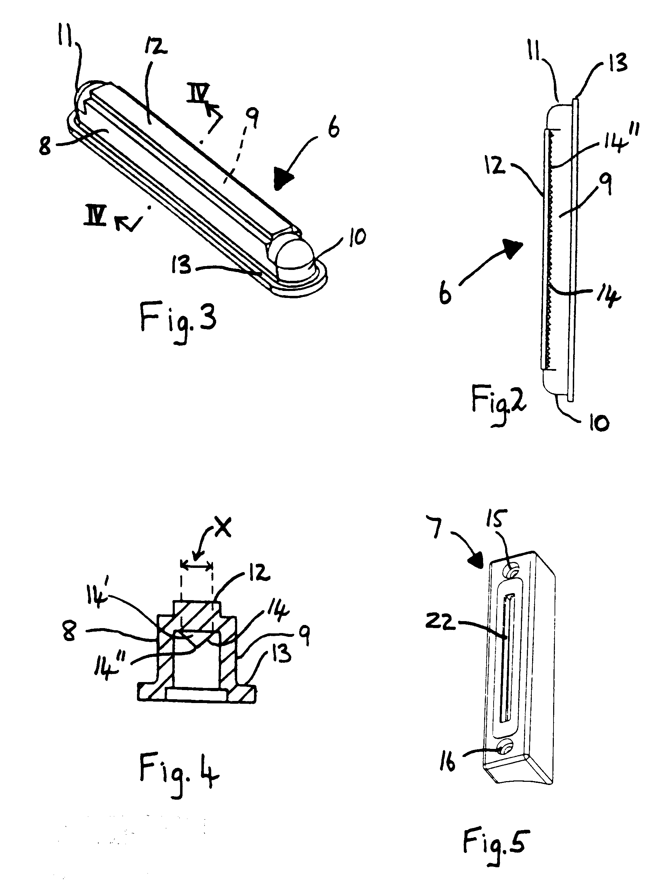

Referring additionally to Figs 2 to 4, the transparent cover 6 is generally in the form of a trough having opposed parallel side walls 8, 9 joined by curved end walls 10, 11 and a front window 12. A peripheral flange 13 extends laterally from the base of the walls 8, 9, 10 and 11. The external surface of the front window 12 is planar and smooth, whereas its internal surface comprises a row of forty two, integrally moulded triangular pyramids 14 etc extending therealong. More particularly, each triangular pyramid 14 is in the form of a cube corner having three triangular faces inclined to one another at a right angle and to the plane of the window 12 at an angle whose tan is 1.33. Each triangular face (one of which 14' can be seen in Fig 4) is, therefore, a substantially right-angled, isosceles triangle and they meet at an apex as designated 14'' in Figs 2 and 4. The triangular pyramids 14 are, however, basally truncated so that they may be arranged together in a row along the length of the window 12 with the apices 14'' all lying on one and the same line and being equispaced from one another. In one specific example, the length of the window 12 is about 58mm and the distance between adjacent apices 14'' is therefore about 1.38mm. The dimension X in Fig 4 may, for example, be between about 2.6mm and 3.5mm. Clearly, the total number of triangular pyramids 14, the dimension X and the spacing between adjacent apices 14'' may be varied consistent with the requisite optical properties being obtained.

Referring now to Fig 5 in conjuction with Fig 1, the transparent cover 6 is retained in place by a saddle-like clamp 7 wnich accommodates the cover 6 and is provided with a pair of bores 15, 16 for receiving respective bolts (not shown) which engage with respective threaded blind bores 17, 18 formed in the bowl 1. Upon tightening of those bolts, the flange 13 of the cover 6 sealingly engages the periphery of the sealing strip 5 whereby a chamber 19 is defined by the cover 6 and the sealing strip 5. The chamber 19 communicates with the interior of the bowl 1 via a pair of bores 20, 21 that extend through the wall of the bowl 1 within the confines of the face 4 and through the sealing strip 5. The front face of the clamp 7 is formed with a rectangular aperture 22 through which the front window 12 of the cover 6 is visible.

In use, filtered-out water 23 collects in the bowl 1 and enters the chamber 19 via the lower bore 20. Reverting to Figure 1 of the drawings, each triangular pyramid 14, when interfaced with air in the chamber 19, ie above the liquid level in the chamber 19 which, of course corresponds with the level 24 in the bowl 1, substantially totally internally reflects most of the light incident on it from outside. Accordingly, a substantially colourless image will appear in the window 12 above the liquid level 24. Such total internal reflection is depicted by the arrows A, A' in Figure 1. On the other hand, when interfaced with liquid 23 admitted into the chamber 19, the pyramids 14 transmit most of the light, via the liquid 23, to the orange strip 5 whence it is reflected back through the liquid 23 and the window 12. A solid band of orange therefore appears in the window 12 at and below the liquid level 24. Such transmission/reflection is depicted by the arrows B, B' in Figure 1. A sharp, clear transition between a substantially colourless image and the orange image which occurs at and below the level 24 is therefore visible in the window 12. Thus, the liquid level within the bowl 1 may be instantly ascertained. It should be noted that, whilst we refer above to a substantially colourless image being visible above the liquid level 24, light incident on the apex of each pyramid 14 above that level will be transmitted to the strip 5 and reflected back through the window 12. Accordingly, the image will, in fact, comprise a number of very small, spaced orange dots although, except at close quarters, it will appear to be a substantially colourless band.

## Claims

1. A sight glass comprising a chamber (19) into which liquid (23) whose level (24) is to be determined can be admitted, the chamber (19) being defined in part by a translucent front wall (12) and a rear wall (5) arranged in spaced relationship with one another, characterised in that the internal surface of the front wall (12) comprises a plurality of generally pyramidal formations (14) each arranged with an apex (14'') thereof facing the rear wall (5) so that, when interfaced with air, they retro-reflect a major proportion of light incident thereon back through the front wall (12) but that, when interfaced with a liquid (23), they transmit a major proportion of such light to the rear wall (5) whence it is reflected back through the liquid (23) and the front wall (12), the internal surface of the rear wall (5) being coloured or otherwise ornamented, whereby visibly contrasted images between that part of the front wall (12) interfaced with air and that part thereof interfaced with liquid (23) will be visible through the front wall (12).

2. A sight glass according to claim 1 wherein each of said generally pyramidal formations (14) is a cube corner.

3. A sight glass according to claim 2 wherein said cube corners are arranged in side-by-side relationship along the internal surface of said front wall (12) with the said apices (14'') lying on one and the same line and being equispaced from one another.

4. A sight glass according to any one of claims 1 to 3 wherein the front wall (12) and said generally pyramidal formations (14) are moulded integrally with one another in transparent plastics material.

5. A compressed air filter or lubricator having an opaque bowl (1) provided with a sight glass as claimed in any one of claims 1 to 4 whereby the level of liquid (23) contained in the bowl (1) will be readily visible.
